# EUROPEAN PATENT APPLICATION

(11) **EP 4 430 947 A1**
(43) Date of publication of application: **18.09.2024**
(21) Application number: 23162754.8
(22) Date of filing: 17.03.2023
(51) Int. Cl.: A01N 43/80, A01P 7/02, A01P 7/04

(54) **THERAPEUTIC USE OF ISOXAZOLINE COMPOUNDS, COMPOSITION OF ISOXAZOLINE COMPOUNDS AND KIT FOR THERAPEUTIC USE**

(71) Applicant: Przedsiebiorstwo Wielobranzowe "Vet-Agro" Sp. Z O.O., 20-616 Lublin (PL)
(72) Inventor: TRYTEK, Mariusz, 23-300 Janow Lubelski (PL); BORSUK, Grzegorz, 20-515 Prawiedniki (PL); DURKO, Krzysztof, 20-572 Lublin (PL)
(74) Representative: JD&P Patent Attorneys Joanna Dargiewicz & Partners

(57) **Abstract**

The subject matter of the invention is a new therapeutic use of isoxazoline compounds as active ingredients of veterinary medicinal products, a composition of isoxazoline compounds and a kit for a new therapeutic use.

## Description

The subject matter of the invention is a new therapeutic use of isoxazoline compounds as active ingredients of veterinary medicinal products, a composition of isoxazoline compounds and a kit for new therapeutic use.

There is a hitherto unsolved problem concerning the occurrence of honey bee parasites, mites called *Varroa* mite (*Varroa destructor* in Latin), which leads to weakening and death of the infested insect. Formerly, the *Varroa destructor* mite was identified as *Varroa jacobsoni,* but according to recent scientific reports, the parasites *V*. *destructor* and *V*. *jacobsoni* are two separate mite species that can be distinguished based on the DNA sequence of the cytochrome oxidase I (COI) gene in mitochondrial DNA. Studies of the mitochondrial DNA allowed distinguishing two haplotypes of V. *destructor* species parasitizing the *Apis mellifera* honey bee [Delfinado-Baker M., 1998. Variability and biotypes of Varroa jacobsoni Oudemans. Am. Bee J., 128, 567-568; Solignac M., Cornuet J. M., Vautrin D., Conte Y. L., Anderson D., Evans J., Cros-Arteil S., Navajas M., 2005. The invasive Korea and Japan types of Varroa destructor, ectoparasitic mites of the Western honeybee (Apis mellifera), are two partly isolated clones. Proc. R. Soc. B., 272 (1561), 411-419]. The Korean (K) haplotype, also known as Russian or ¼ Russian, is found in Europe, North America, South Africa and the Middle East. The Japanese (J) haplotype, on the other hand, is found in Japan, South America, as well as Thailand. In Asia, 18 haplotypes of V. *destructor* have been described, 11 of which parasitize the *Apis cerana* bee, while 7 parasitize the *Apis mellifera* bee [Navajas M., Anderson D.L., de Guzman L.I., Huang Z.Y., Clement J., Zhou T., Le Conte Y., 2010. New Asian types of Varroa destructor: a potential new threat for world apiculture. Apidologie, 41 (2), 181-193]. The Korean (K) haplotype of mites is found worldwide and is the most virulent compared to all other haplotypes of mites of the *Varroa* genus [De Guzman L. I., Rinderer T. E., Stelzer J. A., 1997. DNA evidence of the origin of Varroa jacobsoni Oudemans in the Americas. Biochem. Genet., 35 (9-10), 327-335; Delfinado-Baker M. 1998.Variability and biotypes of Varroa jacobsoni Oudemans. Am. Bee J., 128, 567-568; De Guzman L. I., Rinderer T. E., Stelzer J. A., 1999. Occurrence of two genotypes of Varroa jacobsoni Oud. in North America. Apidologie, 30 (1), 31-36; Anderson D., Trueman J. W. H., 2000. Varroa jacobsoni (Acari: Varroidae) is more than one species. Exp. Appl. Acarol., 24 (3), 165-189; Muñoz I., Bailón E. G., Hernández R. M., Meana A., Higes M., De la Rúa P., 2008. Genetic profile of Varroa destructor infesting Apis mellifera iberiensis colonies. Journal of Apicultural Research and Bee World 47(4): 310-313 (2008); Rosenkranz P., Aumeier P., Ziegelmann B., 2010. Biology and control of Varroa destructor. J. Invertebr. Pathol., 103, 96-119].

Based on the virulence of the viruses carried by female V. *destructor,* there are suggestions in the literature [Topolska G., 2001. Varroa destructor (Anderson and Trueman, 2000); the change in classification within the genus Varroa (Oudemans, 1904). Wiad. Parazytol., 47 (1), 151-155] that the mites found in Poland belong to the Korean haplotype, and according to [Borsuk G. *Zróżnicowanie morfometryczne, genetyczne, epigenetyczne i biochemiczne Varroa destructor opornych oraz wrailiwych na tau-fluwalinat (Morphometric, genetic, epigenetic and biochemical diversity of Varroa destructor resistant and sensitive to tau-fluvalinate).* In: 2013 (368) 1-79, Rozprawy Naukowe (Scientific Dissertations), Ed. University of Life Sciences in Lublin, ISSN 1899-2374], it was confirmed by studies using molecular genetics. Korean and Japanese haplotypes of mites belong to two different, distant populations as they form separate clusters [Navajas M., Anderson D.L., de Guzman L.I., Huang Z.Y., Clement J., Zhou T., Le Conte Y., 2010. New Asian types of Varroa destructor: a potential new threat for world apiculture. Apidologie, 41 (2), 181-193]. The family structure of the V. *destructor* species arises from a single common ancestor/family founder, then family members differentiate into haplogroups and then into haplotypes. In a given family, there is an increase in homozygosity caused by a specific haplodiploid type of sex determination, in which females of the *Varroa* genus are inseminated by their brothers [Reich S.E., Fuchs S., Schulz A., Urfer W., 1998. Geometric approximation of the infestation of honey bee brood cells by Varroa jacobsoni and implications for the estimation of brood infestation, for population models and for the proportion of non-sibling matings. J. Apic. Res., 37 (2), 115-123; Solignac M., Cornuet J. M., Vautrin D., Conte Y. L., Anderson D., Evans J., Cros-Arteil S., Navajas M., 2005. The invasive Korea and Japan types of Varroa destructor, ectoparasitic mites of the Western honeybee (Apis mellifera), are two partly isolated clones Proc. R. Soc. B., 272 (1561), 411-419; Rosenkranz P., Aumeier P., Ziegelmann B., 2010. Biology and control of Varroa destructor. J. Invertebr. Pathol., 103, 96-119]. Once a population has collapsed/was destroyed, it only takes one or two individuals to rebuild it quickly. This is when the founder effect can manifest itself, in this case, of the family founder, who passes on the genes to the descendant generations [Solignac M., Cornuet J. M., Vautrin D., Conte Y. L., Anderson D., Evans J., Cros-Arteil S., Navajas M., 2005. The invasive Korea and Japan types of Varroa destructor, ectoparasitic mites of the Western honeybee (Apis mellifera), are two partly isolated clones. Proc. R. Soc. B., 272 (1561), 411-419; Fries I., Bommarco R., 2007. Possible host-parasite adaptations in honey bees infested by Varroa destructor mites. Apidologie, 38 (6), 525-533]. This specific type of sex determination results in a large variety of haplotypes of mites of the *Varroa* genus [Solignac M., Cornuet J. M., Vautrin D., Conte Y. L., Anderson D., Evans J., Cros-Arteil S., Navajas M., 2005. The invasive Korea and Japan types of Varroa destructor, ectoparasitic mites of the Western honeybee (Apis mellifera), are two partly isolated clones. Proc. R. Soc. B., 272 (1561), 411-419]. This type of inheritance favors and perpetuates new mutations [Cornuet J. M., Beaumont M. A., Estoup A., Solignac M., 2006. Inference on microsatellite mutation processes in the invasive mite, Varroa destructor, using reversible jump Markov chain Monte Carlo. Theor. Popul. Biol., 69 (2), 129-144], with which the evolutionary adaptations of mites to the anatomical and physiological conditions of the new host are associated. This promotes an increase in the genotypic variability of the parasite [Facon B., Genton B.J., Shykoff J., Jarne P., Estoup A., David P., 2006. A general eco-evolutionary framework for understanding bioinvasions. Trends Ecol. Evol., 21 (3), 130-135], and thus a rapid development and transmission of resistance to acaricides that control *Varroa* mites.

Preparations currently used for *Varroa* mite control are as follows:

### Bayvarol^{®}

A product with the trade name Bayvarol^{®} is available in the form of strips, each of which contains 3.6 mg of the active ingredient, flumethrin. Flumethrin is a chemical compound from the pyrethroid group and is classified as a third-generation insecticide. It acts within the sodium channels of the nerve fiber sheath of the parasites. It causes prolonged opening of the channels and penetration of sodium ions into the nerve fiber, which impairs the conduction of stimuli and leads to paralysis and death of the parasites. In addition, it can inhibit the activity of certain cellular enzymes (ATPases, phosphodiesterases) and alter the catecholamine concentrations. In insects, it acts through contact and ingestion, and can counteract the closure of spiracles, which causes the death of the insect by drying out. A maximum of four strips are hung in a bee colony. In a small bee colony (nuc), two strips are sufficient. Bayvarol is hung directly between frames of combs. The strips should be hung so that the bees can move freely between them and have access to either side of the strip. The hanged strips should not stay in the bee colonies for more than six weeks. This is because it is possible that the mites will become resistant to the preparation composition, and subsequent mite control treatment will take much longer and will certainly be more difficult.

### Apiwarol^{®}

A product with the trade name Apiwarol^{®} is available as a tablet for burning in a bee colony (fumigation), and contains 12.5 mg of amitraz per tablet. The active ingredient, amitraz, is a formamidin acaricide. Its efficacy is based on alpha-adrenergic agonist activity, interaction with octopamine receptors of the central nervous system (enhancement of nerve conduction in ectoparasites), inhibition of monoamine oxidases (MAO), and inhibition of prostaglandin synthesis. Apiwarol acts only on *Varroa destructor* mites located on the bee exoskeleton. It does not destroy the parasite and its developmental stages located under the capped brood. The best results of V. destructor mite control are obtained by carrying out fumigation two times in spring and two or three times in the fall at intervals of 4-6 days, when there is the least amount of capped brood in the hive.

### Biowar^{®}

A product with the trade name Biowar^{®} is used in the form of strips for hanging in a bee colony, and the active ingredient is amitraz in an amount of 500 mg per strip; it is recommended to use two strips per bee colony. The strips are left in the colony for a period of 6 weeks. The maximum period after which the strips should be removed is 8 weeks. The recommended treatment period: After the last honey harvest (late summer/fall) and in the spring before the first forage from which one will obtain consumable honey.

Amitraz has been found to have an insect repelling effect, acts as an insecticide and also as a pesticide synergist.

Currently, only two active ingredients, flumethrin and amitraz, are approved in bee medicines in use. Due to the lack of access to new active ingredients with a different spectrum of action, it is observed that the control of *Varroa destructor* mites is becoming increasingly difficult, as the mites have developed resistance to these two active ingredients [Borsuk G. Zróżnicowanie morfometryczne, genetyczne, epigenetyczne i biochemiczne *Varroa destructor opornych oraz wrailiwych na taufluwalinat (Morphometric, genetic, epigenetic and biochemical diversity of Varroa destructor resistant and sensitive* to *tau-fluvalinate).* In: 2013 (368) 1-79, Rozprawy Naukowe (Scientific Dissertations), Ed. University of Life Sciences in Lublin, ISSN 1899-2374].

The problem with *Varroa* mite control also lies in the coinciding developmental cycle of mites and bees. Between the 8th and 9th day of bee development, the larva is capped in the bee cell of the comb. Before capping, the female *Varroa* climbs under the bee larva and the bees cap the cell with a wax-pollen cap. Under the cap of the capped cell, where the larva is located, no acaricides for mite control work. Then the *Varroa* female lays the first egg from which the male will develop, followed by a second egg from which the female will develop. After transformation, the mites feed on the hemolymph and the protein and fat body of the developing bee. The bee, completing its development cycle, chews its way out of the cell and carries away on its own body the mature *Varroa* females, which are able to reproduce as they are inseminated by their brothers [Rosenkranz P., Aumeier P., Ziegelmann B., 2010. Biology and control of Varroa destructor. J. Invertebr. Pathol., 103, 96-119]. Further on, the cycle repeats itself. The point at which we can reduce the presence of *Varroa* mites is the phoretic phase, which is the point at which the mites are carried on the body of the bees.

The current use of isoxazolines to control mites, fleas and ticks parasitizing dogs, cats or poultry is known from patent publications, i.a. RU2688167 C1 and US2022168278 A1. However, there are no reports to date of successful attempts to apply the compounds from the isoxazolin group against insects parasitizing insects.

The isoxazolines form a relatively new class of mite-killing insecticides, which include: fluralaner, afoxolaner, sarolaner, and lotilaner.

The mechanism of action of isoxazolines is to block glutamate- and gamma-aminobutyric acid-gated chloride channels in the nervous system of arachnoids, which results in their killing.

Fluralaner, 4-[(5RS)-5-(3,5-dichlorophenyl)-4,5-dihydro-5-(trifluoromethyl)-1,2-oxazol-3-yl]-N-[2-oxo-2-(2,2,2-trifluoroethylamino)ethyl]-o-toluamide, CAS No. 864731-61-3, represented by the formula below, is a potent inhibitor of part of the arthropod nervous system; exhibits an antagonistic effect against ligand-gated chloride channels (GABA receptor and glutamate receptor).

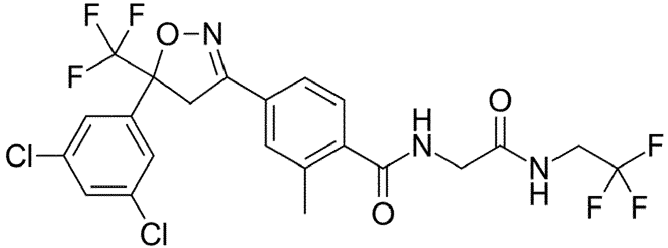

Isoxazolines also stop egg production by female mite and interrupt the life cycle of mites. Isoxazolines have so far been used to control such parasites as fleas, ticks, itch mites, lice, nematodes and other arachnids, which are ectoparasites of hens, dogs, and cats. These parasites share a common feature with *Varroa destructor,* which parasitizes the honey bee, in that they belong to the subphylum of Chelicerata, a class of arachnids whose nervous system is blocked by isoxazolines, to which belongs fluralaner.

Isoxazoline ectoparasiticides are currently sold under trade names NexGard^{®} (afoxolaner, Boehringer Ingelheim), Bravecto^{®} (fluralaner, Merck), Exzolt^{®} (fluralaner, Intervet), Simparica^{®} (sarolaner, Zoetis), and Credelio^{®} (lotilaner, Elanco). They are also presented as combination drugs, together with other active ingredients to control internal parasites (flat worms and round worms): NexGard Spectra^{®} (afoxolaner and milbemycin oxime, Boehringer Ingelheim), Bravecto Plus^{®} (fluralaner and moxidectin, Merck), Simparica Trio^{®} (sarolaner, moxidectin and pyrantel, Zoetis), and Revolution Plus^{®} (selamectin and sarolaner, Zoetis).

Isoxazolines are administered both orally, in tablet form or with water to drink, as well as in liquid form for topical application to the skin.

Examples of concentrations of various isoxazolines used in commercial drugs for administration to various animal species for parasite control:

| **Name of the (isoxazoline) active substance (trade name of the drug, manufacturer)** | **Route of administration (target species)** | **Minimum dose of isoxazoline administered per 1 kg of body weight** |
|---|---|---|
| Fluralaner (Exzolt^{®}, Intervet International B.V.) | Oral-solution to be administered in drinking water (hens, chickens, laying hens) | 0.5 mg/kg |
| Fluralaner (Bravecto^{®}, Merck) | Oral-chews (dogs) | Dogs: |
| | | orally: 25 mg/kg |
| | Topical-spot-on solution (dogs and cats) | topically: 25 mg/kg Cats: |
| | | topically: 40 mg/kg |
| Afoxolaner (NexGard^{®}, Boehringer Ingelheim) | Oral-chewables (dogs) | 2.5 mg/kg |
| Sarolaner (Simparica^{®}, Zoetis) | Oral-chewables (cats) | 2 mg/kg |
| Tigolaner (Felpreva^{®}, Vetoquinol S.A.) | Topical (cats) | 14.4 mg/kg |
| Lotilaner (Credelio^{®}, Elanco) | Oral-chewables (dogs and cats) | Dogs: 20 mg/kg |
| | | Cats: 6 mg/kg |

Thus, there is a need for an effective preparation for use in the control of *Varroa destructor* mites in honey bees, as well as a new way of dosing this preparation.

Unexpectedly, it turned out that the compounds of heterocyclic isoxazolines, hitherto used as effective insecticides/acaricides in poultry and domestic animals (cats and dogs), selected from compounds such as: fluralaner, CAS No. 864731-61-3; fluxametamide, CAS No. 928789-76-8; 4-[5-(3,5-dichlorophenyl)-5-(trifluoromethyl)-4H-isoxazol-3-yl]-2-methyl-N-(thietan-3-yl)benzamide, CAS No. 1164267-94-0; sarolaner, CAS No. 1398609-39-6, lotilaner, CAS No. 1369852-71-0, afoxolaner, CAS No. 1093861-60-9; 5-[5-(3,5-dichlorophenyl)-4,5-dihydro-5-(trifluoromethyl)-3-isoxazolyl]-3-methyl-N-[2-oxo-2-[(2,2,2-trifluoroethyl)amino]ethyl]-2-thiophenecarboxamide, CAS No. 1231754-09-8, may show effective activity as veterinary medicinal preparations for the control of external parasites/Varroa destructor mites in honey bees, thereby improving their health.

The subject matter of the present invention is isoxazoline compounds for use in the control of *Varroa destructor* parasites in honey bees.

Preferably, the above-mentioned isoxazoline compounds are selected from:
Fluralaner, CAS No. 864731-61-3;
Fluxametamide, CAS No. 928789-76-8;
4-[5-(3,5-Dichlorophenyl)-5-(trifluoromethyl)-4H-isoxazol-3-yl]-2-methyl-N-(thietan-3-yl)benzamide, CAS No. 1164267-94-0;
Sarolaner, CAS No. 1398609-39-6;
Lotilaner, CAS No. 1369852-71-0;
Afoxolaner, CAS No. 1093861-60-9; and
5-[5-(3,5-Dichlorophenyl)-4,5-dihydro-5-(trifluoromethyl)-3-isoxazolyl]-3-methyl-N-[2-oxo-2-[(2,2,2-trifluoroethyl)amino]ethyl]-2-thiophenecarboxamide, CAS No. 1231754-09-8.

The subject matter of the invention is also fluralaner for use in the control of *Varroa destructor* parasites in honey bees.

Another subject matter of the invention is a composition containing at least one isoxazoline compound as defined above for use in controlling *Varroa destructor* parasites in honey bees, preferably the composition contains an isoxazoline compound at a concentration of 0.1 to 6 mg/mL suspended in an oil carrier.

Preferably, the above-mentioned composition contains fluralaner suspended in a carrier.

Preferably, the above-mentioned composition contains fluralaner in a concentration of 0.1 to 6 mg/mL suspended in an oil carrier.

Preferably, the above-mentioned composition contains fluralaner in a concentration of 1.25 to 5 mg/mL, preferably 2.5 to 5 mg/mL, suspended in an oil carrier.

Preferably, the above-mentioned composition contains fluralaner at a dose of 2.5 mg suspended in an oil carrier having volume of 0.5 mL.

Preferably, the above-mentioned composition contains fluralaner at a dose of 5 mg suspended in an oil carrier having volume of 1 mL.

Preferably, the above-mentioned composition contains at least one additional excipient in addition to fluralaner suspended in an oil carrier.

Preferably, the at least one additional excipient is selected from a group comprising solubilizing agents, emulsifiers and antioxidants.

Preferably, the at least one additional excipient has a solubilizing effect and more preferably, is diethylene glycol monoethyl ether.

Also preferably, the at least one additional excipient in the above-mentioned pharmaceutical composition has an emulsifying effect and more preferably, is a mixture of polyoxyethylene derivatives of sorbitan and oleic acid.

Preferably, the above-mentioned composition contains an excipient having a solubilizing effect, which more preferably, is diethylene glycol monoethyl ether, and contains an excipient having an emulsifying effect, preferably in the form of a mixture of polyoxyethylene derivatives of sorbitan and oleic acid.

The subject matter of the present invention is also a kit for use in the control of *Varroa destructor* parasites in honey bees, comprising at least one isoxazoline compound selected from:
Fluralaner, CAS No. 864731-61-3;
Fluxametamide, CAS No. 928789-76-8;
4-[5-(3,5-Dichlorophenyl)-5-(trifluoromethyl)-4H-isoxazol-3-yl]-2-methyl-N-(thietan-3-yl)benzamide, CAS No. 1164267-94-0;
Sarolaner, CAS No. 1398609-39-6;
Lotilaner, CAS No. 1369852-71-0;
Afoxolaner, CAS No. 1093861-60-9; and
5-[5-(3,5-Dichlorophenyl)-4,5-dihydro-5-(trifluoromethyl)-3-isoxazolyl]-3-methyl-N-[2-oxo-2-[(2,2,2-trifluoroethyl)amino]ethyl]-2-thiophenecarboxamide, CAS No. 1231754-09-8
and/or comprising a pharmaceutical composition containing at least such isoxazoline compound for use in the control of *Varroa destructor* parasites in honey bees, and preferably comprising an isoxazoline compound at a concentration of 0.1 to 6 mg/mL suspended in an oil carrier, and at least one surface to which the above isoxazoline compound(s) and/or a composition containing at least such compound are applied,

intended for exposure to the honey bee population to be treated, preferably for placement between at least two bee colony combs and/or between a hive comb and a hive wall.

Preferably, the above kit comprises a composition comprising fluralaner having a concentration in the range of 0.1-6 mg/mL, more preferably 1.25-5 mg/mL, more preferably 2.5-5 mg/mL, and most preferably 2.5 mg/mL, suspended in a carrier, preferably an oil carrier, and which composition is applied to at least one surface for exposure to the honey bee population to be treated, preferably for placement between at least two bee colony combs and/or between a hive comb and a hive wall.

Equally preferably, the above kit comprises a composition comprising fluralaner having a concentration in the range of 0.1-6 mg/mL, more preferably 1.25-5 mg/mL, more preferably 2.5-5 mg/mL, and most preferably 5 mg/mL, suspended in a carrier, preferably an oil carrier, and which composition is applied to at least one surface, for exposure to the honey bee population to be treated, preferably for placement between at least two bee colony combs and/or between a hive comb and a hive wall.

The subject matter of the invention is shown in detail in the embodiments and the results supporting the effectiveness of the invention are shown in the drawing, where:

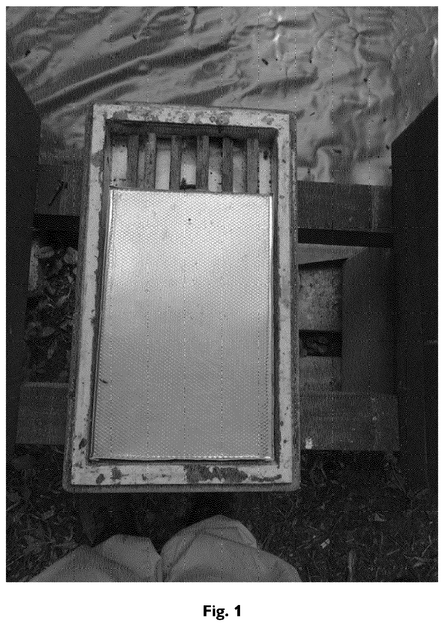

Fig. 1 shows the drawer collecting dead *Varroa destructor* mites, which is placed on the bottom of the hive and secured with a net to prevent bees from carrying the mites outside the hive and to facilitate the counting of dead *Varroa destructor* mites;

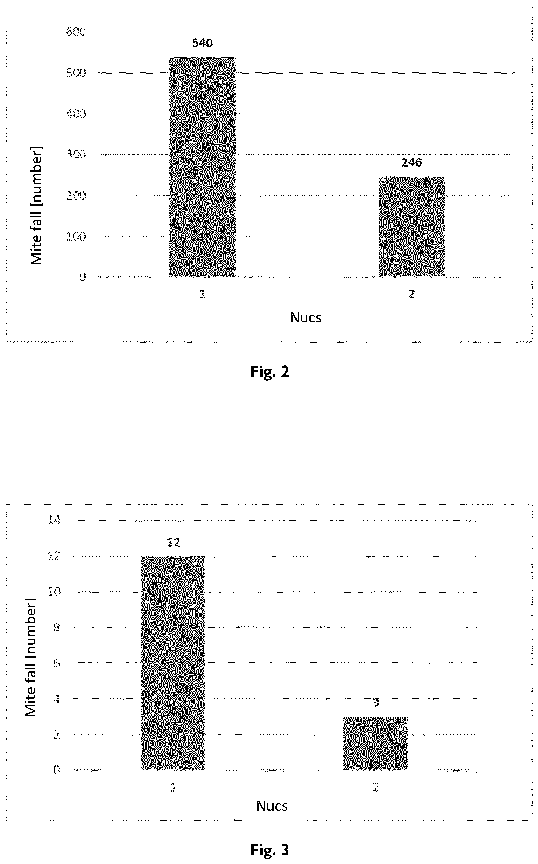

Fig. 2 shows the mite fall, i.e., the number of killed *Varroa destructor* mites in two broodless nucs 1) and 2), according to the experiment of Example 3, after exposing these bee populations for eight (8) days respectively to the composition with fluralaner at a dose of 2.5 mg/mL;
Fig. 3 depicts the *Varroa destructor* mite fall in the nucs 1) and 2) after a 2-day exposure to the amitraz composition (day 10-12 of the experiment from Example 3), based on Fig. 2, so that after applying previously 1-day break in the exposure of the nucs 1) and 2) to any active ingredient, on the tenth (10) day after the administration of fluralaner, the active ingredient composition to which the bees in nucs 1) and 2) were exposed was changed from 2.5 mg/mL fluralaner composition to 12.5 mg/mL amitraz composition, and the experiment continued further for another 2 days;

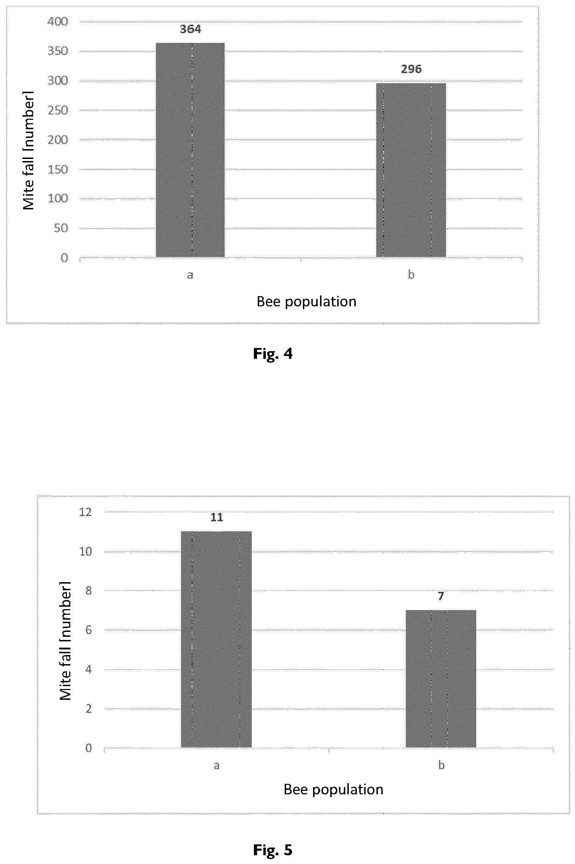

Fig. 4 depicts *Varroa destructor* mite fall in two bee colonies/populations after queen rearing, according to the experiment of Example 4, after exposure of these populations for 3 days to a) the composition with the active ingredient fluralaner at a dose of 5 mg, and to b) the composition with the active ingredient amitraz at a dose of 25 mg/mL, respectively;
Fig. 5 depicts *Varroa destructor* mite fall in two bee colonies in a continuation of the experiment of Example 4 (Fig. 4), so that after a 1-day break in the exposure of bee populations a) and b) to any active ingredient, on the fifth (5) day after the administration of fluralaner, the active ingredient composition to which population a) had so far been exposed was changed from 5.0 mg/mL fluralaner composition to 25 mg/mL amitraz composition, leaving population b) further exposed to 25 mg/mL amitraz composition without change, and continuing the experiment for another 2 days;

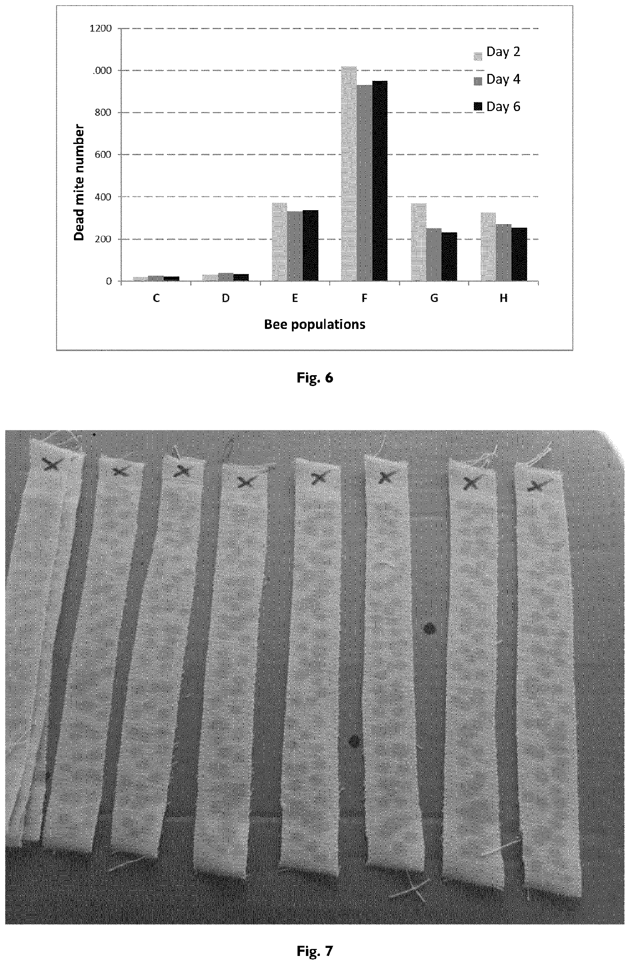

Fig. 6 shows the number of fallen *Varroa destructor* mites in six bee colonies/populations C, D, E, F, G, and H at the end of the beekeeping season, i.e. in the second decade of September, after exposure to fluralaner according to Example 5. All bee populations were first treated with Apiwarol containing the active ingredient amitraz at a dose of 12.5 mg, and after a 2-week brake in the exposure of bee populations to any active ingredient, four colonies/populations (E, F, G, and H) were exposed to a composition with fluralaner at a dose of 5 mg/mL, while two colonies/populations (C, D) were left without change, and the
Fig. 7 shows a kit of strips according to the invention comprising surfaces (2 × 30 cm) soaked in the composition according to the invention.

### EXAMPLES

### Example 1. Method of preparing a liquid veterinary composition and a kit including such a composition

### 1. Method of preparing a liquid veterinary test composition with a concentration of 5 mg/mL (according to the invention) and a kit according to the invention comprising such a composition

### Preparation of a composition according to the invention for use in the control of Varroa destructor parasites

A liquid veterinary pharmaceutical composition was prepared, according to the invention, for the treatment of bees, being a suspension of the therapeutic substance isoxazoline in an oil carrier with the following quantitative and qualitative composition shown in Table 1.

### Method of making a liquid veterinary composition according to the invention:

A base was prepared in a beaker by mixing 456.35 g of diethylene glycol monoethyl ether with 456.35 g of Miglyol 812. 50 g of Polysorbate 80 was added to the resulting base and stirred until homogeneous. Then 0.1 g of butylhydroxyanisole and 0.2 g of butylhydroxytoluene were added and stirred until dissolved. To the resulting solution, 5 g of fluralaner was added and stirred until dissolved.

**Table 1. Qualitative and quantitative composition of 1 mL of the treatment composition (the so-called test composition) containing fluralaner for use against Varroa destructor**

| No. | Name of the ingredient in the pharmaceutical composition | Concentration/mass of the ingredient | Ingredient function | Quality |
|---|---|---|---|---|
| 1 | Fluralaner | 5.0 mg/mL organic solution | Active ingredient | In-house |
| 2 | Butylhydroxyanisole | 0.1 mg | Antioxidant | Ph.Eur. 0880 |
| 3 | Butylhydroxytoluene | 0.2 mg | Antioxidant | Ph.Eur. 0581 |
| 4 | Polysorbate 80 | 50.0 mg | Emulsifier | Ph.Eur. 0428 |
| 5 | Diethylene glycol monoethyl ether | 456.35 mg | Solubilizer to increase absorption | Ph.Eur. 1198 |
| 6 | Miglyol 812 | 456.35 mg | Oil carrier, the main ingredient of the drug base | Ph.Eur. 0868 |

In the composition the active ingredient fluralaner was used as the isoxazoline compound, at a dose of 5 mg, contained in a volume of 1 mL of a carrier consisting of diethylene glycol monoethyl ether and an oil substance with the trade name Miglyol 812, which is a mixture of triglycerides of saturated medium-chain fatty acids, mainly caprylic and capric acid.

### Preparation of a kit according to the invention for use in the control of Varroa destructor parasites

The composition according to the invention (hereinafter referred to as the test composition) was then evenly applied to the surface of one cotton strip of a fiber density of 300 g/m² and a surface of 60 cm², so that the surface of the strip was evenly soaked in the composition on both sides.

The composition applied to the surface of the cotton strip composed a kit according to the invention.

To soak one strip in the experiment according to Examples 3, 4, and 5, a total of 0.5 mL of the above composition of fluralaner oil solution from Table 1 was used, i.e., obtaining a dose of 2.5 mg/mL. Then the kit prepared in this way was placed in the bee populations of the first (1) and (2) nuc according to Example 3 and in population a) according to Examples 4 and 5.

In turn, a total of 0.5 mL of the fluralaner oil solution composition from Table 1 was used to soak one strip in the experiment according to Example 2 at doses of 1.25 mg; 1.66 mg; 2.5 mg, and 5 mg. Then the kits prepared in this way were placed, each strip separately, in the nuc colonies for the bee populations according to Example 2.

### 2. Method of preparing a liquid veterinary comparative (reference) composition and a kit according to the invention comprising such a composition

### Preparation of the composition of a comparative (reference) kit for use in the control of Varroa destructor parasites

A comparative composition (Table 2) was prepared for the population of the 1) and 2) nuc, containing the active ingredient amitraz as a control/comparative substance, at a concentration of 25 mg/mL, suspended in Miglyol 812 oil carrier and diethylene glycol monoethyl ether. The composition had the qualitative and quantitative composition according to Table 2 below.

### Method of making a liquid veterinary comparative (reference) composition:

A base was prepared in a beaker by mixing 456.35 g of diethylene glycol monoethyl ether with 456.35 g of Miglyol 812. 50 g of Polysorbate 80 was added to the resulting base and stirred until homogeneous. Then 0.1 g of butylhydroxyanisole and 0.2 g of butylhydroxytoluene were added and stirred until dissolved. To the resulting solution, 25 g of amitraz was added and stirred until dissolved.

Table 2. Qualitative and quantitative composition of 1 mL of the comparative composition containing amitraz used as a control substance against *Varroa destructor* parasitizing:
- The bee populations a) and b) of the nuc (1) and (2) according to Example 4
- The 1) and 2) nucs according to Example 3

| No. | Name of the ingredient in the pharmaceutical composition | Concentration/mass | Ingredient function | Quality |
|---|---|---|---|---|
| 1 | Amitraz | 25 mg/mL | Active ingredient | In-house |
| 2 | Butylhydroxyanisole | 0.1 mg | Antioxidant | Ph.Eur. 0880 |
| 3 | Butylhydroxytoluene | 0.2 mg | Antioxidant | Ph.Eur. 0581 |
| 4 | Polysorbate 80 | 50.0 mg | Emulsifier | Ph.Eur. 0428 |
| 5 | Diethylene glycol monoethyl ether | 456.35 mg | Solubilizer to increase absorption | Ph.Eur. 1198 |
| 6 | Miglyol 812 | 456.35 mg | -Oil carrier, the main ingredient of the drug base | Ph.Eur. 0868 |

### Preparation of a comparative (reference) kit for use in the control of Varroa destructor parasites

The composition thus prepared was evenly applied in an amount of 0.5 mL to the surface of one strip made of the same material and with the same surface as the test composition kit described in point 1 above, so that the surface was evenly soaked in the composition on both sides. A total of 0.5 mL of the amitraz composition, which is an oil solution of amitraz at a concentration of 25 mg/mL, was used to soak the strip. The composition applied to the surface of the cotton strip was the comparison (reference) kit. The kit with amitraz was placed in the bee populations of 1) and 2) nucs after removing the strips with fluralaner (Example 3), the kit with amitraz was placed in the first population after removing the strips with fluralaner (Example 4) and in the second population (Example 4).

### Example 2. Determining fluralaner dose that is safe for bees

During the month of June, each of the four bee colonies, i.e. four nucs located in separate four hives, was exposed to the active ingredient fluralaner, spotted on a single 2×30 cm strip placed in each of the four hives. In each hive, the bees very densely covered 4 Dadant combs, wherein a Dadant frame has dimensions of 435×300 mm and a colony has about 30,000 bees. The hives were equipped with ventilation, i.e., three net-covered 90-mm diameter ventilation holes in the bottom of the hive, one in the side wall and two in the roof with the dimensions of 40×20 mm. A drawer was placed at the bottom of the hive and secured with a net (Fig. 1) to prevent bees from carrying mites and to facilitate counting dead mite individuals. At the same time, dead bees were counted. The colonies had brood at different stages of development and brooding queens. Each of these colonies i.e. each of the four nucs, was treated with a composition containing the active ingredient fluralaner at four different doses: 1.25 mg; 1.66 mg; 2.5 mg; 5 mg, wherein the composition was spotted onto individual strips, which were then placed one in each nuc/hive.

A composition containing a dose of fluralaner (1.25 mg) was prepared in such a way that the composition of the fluralaner oil solution according to Table 1 of Example 1 point 1 was diluted four times with a mixture of diethylene glycol monoethyl ether with Miglyol 812 oil.

A composition containing a dose of fluralaner (1.66 mg) was prepared in such a way that the composition of the fluralaner oil solution according to Table 1 of Example 1 point 1 was diluted three times with a mixture of diethylene glycol monoethyl ether with Miglyol 812 oil.

A kit containing a composition containing a dose of fluralaner (2.5 mg) was prepared in such a way, that one strip intended for one nuc was soaked in the composition of fluralaner oil solution according to Table 1 of Example 1 point 1 using 0.5 mL of the composition.

A kit containing a composition containing a dose of fluralaner (5 mg) was prepared in such a way, that two strips, intended for one colony/hive, were soaked in the composition of fluralaner oil solution according to Table 1 of Example 1 point 1 using 0.5 mL of the composition for each strip.

It was difficult to ascertain the degree of initial bee infestation with *Varroa destructor* mites, since *Varroa* mites had been eradicated (using amitraz) last fall in these nucs; in addition, the mites could hide in the bee brood, under the cap, so it should be assumed that the mite fall before the application of fluralaner was small.

Table 3 shows the mite fall after four doses of fluralaner were administered.

**Table 3 shows the mite fall (in the nucs) during determination of the fluralaner dose that is safe for the bees**

| Nucs | Fluralaner dose [mg] | Number of mites fallen after one (1) day of active ingredient administration | Biological observations of colonies for 4 weeks | |
|---|---|---|---|---|
| | | | Bees/brood, at the bottom of the hive or at its entrance | Presence of the queen |
| 1 | 0 | 0 | 0 | Present |
| 2 | 1.25 | 3 | 0/0 | Present |
| 3 | 1.66 | 4 | 0/0 | Present |
| 4 | 2.5 | 5 | 0/0 | Present |
| 5 | 5 | 6 | 10 dead bees at hive entrance/0 | Present |

### Example 3. Comparative study of the action of the fluralaner versus amitraz composition in a population of brood less bees with a population size of approximately 40,000 bees very densely covering 5 combs

In order to catch *Varroa* destructor mites, in the month of July, open bee brood was placed in colonies, after the queens had been reared throughout the beekeeping season, and where the colonies were heavily infested with mites (as determined by the presence of wingless bees and bees with mites on their body surfaces; all the bees would have to be killed to determine the total degree of infestation). The mites need brood to produce offspring. Once the brood was capped by the bees, it was used to make two 1) and 2) five-comb nucs (435×300 mm Dadant frame, with about 40,000 bees), in six-comb nuc hives. By 1) and 2) nuc we mean bee populations of about 40,000 and no more than 50,000 individuals, and with a population strength of bees covering no more than 5 Dadant combs.

Two populations of bees that showed signs of *Varroa destructor* mite infestation (the bees in the colony were wingless and had clearly visible mites on their body surfaces) were subjected to the experiment, which involved exposure to the active ingredient, in two nucs 1) and 2) placed in two separate hives. Only adult bees took part in the experiment, i.e. in both populations of test bees (1) and (2) there were no developmental stages e.g. brood. The nuc hives were equipped with ventilation, i.e., with three net-covered 90-mm diameter ventilation holes in the bottom of the hive, one in the side wall and two in the 40×20 mm roof.

Non-inseminated bee queens that did not brood (did not lay eggs) were used for the nucs 1) and 2), which prevented the mites from hiding under the capping of the developing bee larvae or brood. After all the brood chewed itself out of the combs (the V. *destructor* mites were henceforth only on the bees (the phoretic stage)), drawers secured with a net were placed on the bottom of the hives (Fig. 1), so that after the mites detached themselves from the bees and fell on the bottom of the hive, the mites would not be carried by the bees out of the nuc. Into each hive with such prepared nucs 1) and 2), a kit according to the invention was placed, in the form of two strips soaked in oil mixed with fluralaner (dose per strip 2.5 mg in 0.5 mL). That is, the nuc in each hive received a medicinal composition containing fluralaner at a dose of 5 mg with a composition analogous to that shown in Table 1 of Example 1 point 1. (Method of preparing a liquid veterinary test composition according to Example 1 point 1 and its composition according to Table1). This turned out to be too high dose for the nuc, as dead bees were observed during the passing of the day at hive entrance. Subsequently, after a day, a single strip was left per hive, i.e. a kit consisting of 1 strip soaked in 0.5 mL of the composition containing fluralaner at a dose of 2.5 mg; each bee and the entire population of bees from the nuc 1) and 2) had the opportunity to come into contact with the surfaces of the strip soaked in this composition. The course of the experiment was such that the bees in hive one (nuc 1) and in hive two (nuc 2) crawled on the combs within the hive and rubbed against the surfaces of the strips with the active ingredient compositions applied. Thus, every single bee in the population of the nuc 1) in the first hive and 2) in the second hive, had the opportunity to come into contact with the active ingredient fluralaner at a dose of 2.5 mg. On the eighth (8) day of the experiment, dead mites were counted (results shown in Fig. 2). The presence of fallen mites on the bottom drawer of the hive was observed, respectively, for the population of the nuc 1) 540 mites, while for the population of the nuc 2) 246 mites (Fig. 2). Thus, the average number of *Varroa destructor* mites killed per day (24 h) was 67 mites for the population of the nuc 1) and 30 mites for the population of the nuc 2).

Fluralaner strips were then removed from both hives. After the strips with compositions were removed, the bees from the nucs 1) and 2) of both hives were left for one day, the ninth (9) day, without exposure to any active ingredient, and then on tenth (10) day for another 2 days the same experiment was continued for both nucs 1) and 2) using a kit which constituted of a single strip installed in the hive, soaked in turn in a composition of the active ingredient amitraz at a dose of 12.5 mg, instead of the earlier composition with fluralaner at a dose of 2.5 mg, in order to check whether the mite fall would still occur. The method of preparing a composition with the active ingredient amitraz 25 mg/mL diluted/suspended in the same oil carrier as fluralaner (reference), as well as the preparation of the kit and the composition of the reference composition, were previously presented in Example 1 point 2 and in Table 2. Thus, after removing the strip with the fluralaner composition, each individual bee from the population of the nuc 1) and 2) and the entire population of bees of these nucs had the opportunity to come into contact with the composition containing the active ingredient amitraz at a dose of 12.5 mg, i.e. they had the opportunity to come into contact with the surfaces of one strip soaked in 0.5 mL of the amitraz composition at a concentration of 25 mg/mL.

Mites remaining on the bodies of the bees were paralyzed/killed, after which they detached themselves from the surface of the bodies of the bees and fell to the bottom of the hive in the form of a so-called "fall" measured in number of dead mites. At the same time, dead bees were counted at the hive entrance.

Without killing all the bees, it was not possible to determine the degree of total infestation of the bee colony/nuc by V. *destructor* mites. Therefore, the active ingredient composition was changed, from fluralaner 2.5 mg to amitraz 12.5 mg, to which the bees were exposed (both nucs 1) and 2) in both hives) to see how many mites still remained on the bees.

The experiment was completed on twelfth (12) day with the following result: 12 dead mites were found in the hive with the population of nuc 1), while 3 dead mites were found in the hive with the population of nuc 2), as shown in Fig. 3.

As a result of the experiment, it was observed that in the presence of strips soaked in the prepared pharmaceutical composition with fluralaner, the bee queens in the nuc hives become inseminated and began brooding (laying eggs). And the bee brood, i.e. the developmental stages of the bees, did not die, which was confirmed by the absence of larvae at the hive entrance. No dead bees were found at the hive entrance. The estimated efficacy of fluralaner was 96%, while the estimated efficacy of amitraz was 92%.

### Example 4. Study of the action of the fluralaner versus amitraz composition in a population of brood less bees with a population size of 64,000 bees covering 8 combs

Two bee populations a) and b), infested with *Varroa destructor* mites, within two colonies, after rearing queen bees, placed in two separate hives, the first one (where population a) was located) and the second one (where population b) was located) were subjected to the experiment, which involved exposure to the active ingredient. In the experiment, for reasons analogous to those in Example 3, only adult individuals took part-populations with no developmental stages.

The bee populations a), b) subjected to the experiment were characterized by the fact that they had a comparable size estimated at about 64,000 bees and not less than 50,000 individuals/bees, which covered 8 Dadant combs each, with a frame size of 435×300 mm. Stronger bee colonies were used, which covered more combs, and this gives a larger volume and better ventilation hence a higher dose of 5 mg was used, i.e. two strips soaked in 0.5 mL each of fluralaner composition according to Table 1, so that bees carrying mites would be in contact with an increased surface of the strips and thus with a larger amount of the active ingredient.

For this purpose, a liquid veterinary composition for the treatment of bees (control of V. *destructor* parasites) was prepared according to the invention as described in the Example 1 point 1, constituting a suspension of the active ingredient fluralaner in an oil carrier with the quantitative and qualitative composition as given in Table 1.

The course of the experiment was such that bees moving, crawling on the combs and walls of the hive, rubbed against the surfaces of strips with evenly applied compositions of the active ingredients. Each individual bee of the population a) in the first hive had the opportunity to come into contact with the active ingredient fluralaner at a total dose of 5.0 mg (two strips of 2.5 mg in 0.5 mL).

As in previous experiments, the drawer placed at the bottom of the hive was secured with a net (Fig. 1) to prevent bees from carrying the mites and to facilitate the counting of the dead mites.

The population a) was exposed to the composition with fluralaner at a dose of 5 mg, for a period of three (3) consecutive days. For the same period, population b) in the second hive was exposed to a kit with amitraz composition (25 mg), prepared according to Example 1 point 2 and with a composition according to Table 2. Thus, each individual bee of population b) in the second hive had the opportunity to come into contact with the active ingredient amitraz at a dose of 25 mg, wherein each bee and the entire bee population had the opportunity to come into contact with the surfaces of two strips evenly soaked each in 0.5 mL of amitraz composition at a concentration of 25 mg/mL.

After three (3) days, both fluralaner compositions were removed from both hives and dead mites were counted for both the a) first and b) second hive populations. The results (Fig. 4) show that after three days, 364 dead *Varroa destructor* mites were observed in population a) treated with fluralaner, while 296 dead mites were observed in population b) treated with the active ingredient amitraz (Fig. 4). The daily number of *Varroa destructor* mites killed was about 121 for the fluralaner option and 98 *Varroa destructor* mites for the amitraz option, respectively.

After a 1-day break in the exposure of both bee populations a) and b), to any active ingredient, population a) of the first hive was exposed to strips of composition containing amitraz for another 2 days (Fig. 4), and population b) from the second hive, as a positive control, was exposed further to amitraz (25 mg) composition, continuing the same experiment for another 2 days. In the second hive/colony, queen bees were reared throughout the season using the same methods as in the first hive/colony, so it is assumed that they should have a similar number of mites. The results of the experiment are shown in Fig. 5 and show that after changing the active ingredient on the fifth (5) day, in the population treated with fluralaner at a dose of 5 mg to amitraz at a dose of 25 mg, after seven (7) days of exposure, a fall of another 11 *V*. *destructor* mites was observed, while in the population still exposed to the active ingredient amitraz at a dose of 25 mg, only 7 mites were observed (Fig. 5). The premise was to see how many mites would fall in a colony with assumed similar *Varroa destructor* mite infestation.

As a result of the experiment, it was observed that in the presence of strips soaked in the prepared pharmaceutical composition with fluralaner, bee queens in production hives (containing 10 Dadant combs) become inseminated and began brooding (laying eggs). And the bee brood, i.e. the developmental stages of the bees as well as the adult bees, did not die, which was confirmed by the absence of larvae at the bottom of the hive and at its entrance.

After the application of amitraz, bee queens in hives housing 8 Dadant combs become inseminated and began brooding (laying eggs). And bee brood, i.e. the developmental stages of bees, did not die, which was confirmed by the absence of larvae and dead bees at the bottom of the hive and at its entrance.

The effectiveness of the mite control method in broodless bee populations where queen rearing was completed was estimated at 95%.

### Example 5. Study of the effectiveness of fluralaner composition on V. destructor mites after prior application of Apiwarol in a population of brood less bees with a population size of 64,000 bees covering 8 combs

Six bee populations (C, D, E, F, G, and H) that showed signs of *Varroa destructor* mite infestation were used in the experiment, within six bee colonies housed in six separate hives that were located in the apiary pavilion. All bee populations/colonies were treated by fumigation in early September using Apiwarol tablets containing amitraz at a dose of 12.5 mg.

Only adult bees, populations without any other developmental stages, participated in the experiment for reasons analogous to Example 3. The populations subjected to the experiment were characterized by the fact that they had a comparable size estimated at about 64,000 bees and no less than 50,000 individuals/bees, which covered 8 combs each, on 435×300 mm Dadant frames. The hives were equipped with ventilation, i.e., with four net-covered 90-mm diameter ventilation holes in the bottom of the hive, one in the side wall and two in the roof, measuring 40×20 mm.

After a 2-week break in the exposure of the bee population to any active ingredient (2 weeks after the application of Apiwarol), two control colonies (populations C, D) were left without any active ingredient, while four bee colonies (populations E, F, G, and H) were exposed to the composition with fluralaner at a dose of 5 mg. Into each hive with bee populations E, F, G, and H, 2 cotton strips soaked in the oil composition with fluralaner (dose per strip was 2.5 mg in 0.5 mL) were placed. On the other hand, two strips each soaked in the oil composition without fluralaner were placed into two hives with bee populations C and D. The characteristics of the strips and the method of soaking them in the medicinal composition according to the invention are described in Example 1 point 1 and its composition is shown in Table 1 of Example 1.

Analogously to the previous experiments, the drawer placed at the bottom of the hive was secured with a net (Fig. 1) to prevent bees from carrying the mites and to facilitate the counting of the dead mites.

Fall, i.e. dead mites in all colonies (populations C, D, E, F, G, and H), were counted 2, 4 and 6 days after applying strips with 2.5 mg/mL fluralaner (two strips per colony) and without fluralaner as a control (on days 2, 4 and 6 of the experiment).

On the bottom drawers of the hive in bee populations C and D (untreated with fluralaner), many times lower number of dead mites was observed compared to bee populations E, F, G and H exposed to the composition with fluralaner, as shown in Fig 6. For example, on day 6 of the experiment, 21 and 34 dead mites were observed in hives with bee populations C and D, respectively, while 338, 949, 230 and 253 dead mites were observed in hives with populations E, F, G and H, respectively, as shown in Fig. 6.

Thus, the average number of *Varroa destructor* mites killed per day (24 h) was 9 mites for the control (C-D) populations and 295 mites for the populations subjected to fluralaner.

### Conclusions from the experiments carried out

Experimental results show that isoxazoline compounds, exemplified by a pharmaceutical composition with fluralaner, effectively control *Varroa destructor* mites that are parasites of honey bees. The pharmaceutical composition is applied to the surface of strips, which constitute a kit according to the invention, placed in honey bee colonies. The dose of the active ingredient should be chosen depending on the strength of the colony, i.e. the number of bees in the colony, increasing or decreasing the number of strips with the active ingredient for the control of *V. destructor* mites. Bees that have mites on their body rub against the surface with the medicinal composition, and under its acaricide action the mite is paralyzed/killed and detaches itself from the bee, falling to the bottom of the hive. At the same time, the experiments showed that the action of the active ingredient did not negatively affect the health of honey bees: After application of the preparation, bee queens undergo insemination and undertake egg laying, and the eggs undergo a full development cycle. At the same time, there was no negative effect of the use of fluralaner substance on brood: Neither death of brood nor the presence of dead larvae was observed at the bottom of the hive or at its entrance.

Comparing the experimentally determined therapeutic dose of fluralaner, effective and safe for use in bees, with the therapeutic dose used in hens, we see that the magnitudes of the concentrations are comparable as to the order of magnitude:
0.6 to 0.8 mg of fluralaner per 1 kg of bee weight in a honey bee colony to control *Varroa destructor* 0.5 mg of fluralaner per 1 kg of body weight for the control of red mite *Dermanyssus gallinae* in hens. Concentrations of fluralaner used in dogs and cats are 1 order of magnitude higher at 25 mg/kg bw and 40 mg/kg bw, respectively.

## Claims

1. Isoxazoline compounds for use in the control of *Varroa destructor* parasites in honey bees.

2. Isoxazoline compounds for use according to claim 1, **characterized in that** they include compounds selected from:
Fluralaner, CAS No. 864731-61-3;
Fluxametamide, CAS No. 928789-76-8;
4-[5-(3,5-Dichlorophenyl)-5-(trifluoromethyl)-4H-isoxazol-3-yl]-2-methyl-N-(thietan-3-yl)benzamide, CAS No. 1164267-94-0;
Sarolaner, CAS No. 1398609-39-6;
Lotilaner, CAS No. 1369852-71-0;
Afoxolaner, CAS No. 1093861-60-9; and
5-[5-(3,5-Dichlorophenyl)-4,5-dihydro-5-(trifluoromethyl)-3-isoxazolyl]-3-methyl-N-[2-oxo-2-[(2,2,2-trifluoroethyl)amino]ethyl]-2-thiophenecarboxamide, CAS No. 1231754-09-8.

3. Fluralaner for use in controlling *Varroa destructor* parasites in honey bees.

4. A pharmaceutical composition containing at least one isoxazoline compound as defined in claims 1 or 2, for use in the control of *Varroa destructor* parasites in honey bees, preferably containing an isoxazoline compound at a concentration of 0.1 to 6 mg/mL suspended in an oil carrier.

5. The pharmaceutical composition for use according to claim 4, **characterized in that** it contains fluralaner suspended in a carrier.

6. The pharmaceutical composition for use according to claim 5, **characterized in that** it contains fluralaner at a concentration of 0.1 to 6 mg/mL suspended in an oil carrier.

7. The pharmaceutical composition for use according to claim 5 or 6, **characterized in that** it contains fluralaner at a concentration of 1.25 to 5 mg/mL, more preferably 2.5-5 mg/mL, suspended in an oil carrier.

8. The pharmaceutical composition for use according to any of claims 5 to 7, **characterized in that** it contains fluralaner at a dose of 2.5 mg, suspended in an oil carrier having volume of 0.5 mL, or at a dose of 5 mg suspended in an oil carrier having volume of 1 mL.

9. The pharmaceutical composition for use according to any of claims 6 to 8, **characterized in that,** besides fluralaner suspended in an oil carrier, it contains additionally at least one excipient.

10. The pharmaceutical composition for use according to claim 9, **characterized in that** at least one additional excipient is selected from a group comprising solubilizing agents, emulsifiers, and antioxidants.

11. The pharmaceutical composition for use according to claim 9 or 10, **characterized in that** at least one additional excipient has a solubilizing effect and preferably, is diethylene glycol monoethyl ether.

12. The pharmaceutical composition for use according to claim 9 or 10, **characterized in that** the at least one additional excipient has an emulsifying effect and preferably is in the form of a mixture of polyoxyethylene derivatives of sorbitan and oleic acid.

13. The pharmaceutical composition for use according to claims 9 to 12, **characterized in that** it contains an excipient having a solubilizing effect, which is preferably diethylene glycol monoethyl ether, and contains an excipient having an emulsifying effect, preferably in the form of a mixture of polyoxyethylene derivatives of sorbitan and oleic acid.

14. A kit for use in the control of *Varroa destructor* parasites in honey bees, which comprises at least one isoxazoline compound as defined in claims 1 or 2 and/or a pharmaceutical composition containing at least such isoxazoline compound as defined in claim 4, and at least one surface, to which this (these) isoxazoline compound(s) and/or a composition containing at least such a compound are applied, for exposure to a honey bee population do be treated, preferably for placement between at least two bee colony combs and/or between a hive comb and a hive wall.

15. The kit for use in the control of *Varroa destructor* parasites in honey bees according to claim 14, **characterized in that** it comprises a composition containing fluralaner with a concentration in the range of 0.1-6 mg/mL, preferably 1.25-5 mg/mL, more preferably 2.5-5 mg/mL, most preferably 2.5 or 5 mg/mL suspended in a carrier, preferably an oil carrier, and which composition is applied to at least one surface for exposure to a honey bee population to be treated, preferably for placement between at least two bee colony combs and/or between a hive comb and a hive wall.
